# EUROPÄISCHE PATENTSCHRIFT

(11) **EP 2 993 746 B1**
(45) Veröffentlichungstag und Bekanntmachung des Hinweises auf die Patenterteilung: **09.05.2018**
(21) Anmeldenummer: 14183794.8
(22) Anmeldetag: 05.09.2014
(51) Int. Cl.: H02B 1/28

(54) **Transportables Brandschutzsystem für elektrische Anlagen**
Transportable fire protection system for electrical systems
Système transportable de protection contre l'incendie pour les systèmes électriques

(43) Veröffentlichungstag der Anmeldung: 09.03.2016
(73) Patentinhaber: Celsion Brandschutzsysteme GmbH, 02627 Radibor (DE)
(72) Erfinder: Schubert, Boris, 02625 Bautzen (DE)
(74) Vertreter: Lippert Stachow Patentanwälte Rechtsanwälte

(56) Entgegenhaltungen:
- US-A1- 2004 256 132
- US-A1- 2009 145 622
- US-B1- 6 365 826

## Beschreibung

Die Erfindung betrifft ein Brandschutzsystem, welches einen Raum ein- oder mehrseitig abschließt, zumindest einen Feuerwiderstand der Klasse EI30 aufweist und zumindest eine Wand und/oder ein verschließbares Bauelement mit zumindest einer Lüftungsöffnung in Wand und/oder Bauelement umfasst.

Derartige Brandschutzsysteme dienen dem Schutz von durch das System von der Umgebung separierten elektrischen Anlagen (Funktionserhalt) oder separiertem Lagergut vor den im Brandfall auftretenden Temperaturen oder der Ausbreitung eines in den elektrischen Geräten oder dem umschlossenen Raum entstandenen Brandes. In beiden Fällen soll das Brandschutzsystem den auftretenden Temperaturen über einen Mindestzeitraum von 30 Minuten standhalten, um Rettungs- oder Bekämpfungsmaßnahmen vornehmen zu können.

Die beschriebenen Brandschutzsysteme sind in verschiedenen Ausgestaltungen bekannt. Je nach örtlicher Gegebenheit können sie einen Raum entweder als Brandschutzgehäuse vollständig umschließen oder in Verbindung mit vorhandenen Bauteilen, beispielsweise vorhandenem Mauerwerk, die allseitige Umschließung mit Wänden und/oder verschließbaren Bauelementen, hier auch als Tür bezeichnet, vervollständigen. Sie bestehen folglich entweder aus Seiten- und Rückwänden mit Boden- und Deckenwand sowie Tür oder nur einzelnen Bauteilen davon, im einfachsten Fall lediglich einer Tür. Geschlossene Brandschutzgehäuse für elektrische Anlagen sind beispielsweise in der EP 1 451 908 B1 und eine Brandabtrennung, die lediglich aus einer Tür für eine Mauerwerksaussparung besteht, in der DE 10 2005 041 522 A1 beschrieben.

Meist weisen Brandschutzsysteme auch Lüftungsöffnungen für eine Belüftung des umschlossenen Raumes auf, die, wie im Übrigen jeder weitere Bestandteil des Brandschutzsystems auch, derart konstruiert sein müssen, dass sie die jeweiligen Brandschutzanforderungen der Abtrennung nicht mindern bzw. selbst erfüllen müssen. Eine solche Lüftungsöffnung ist beispielsweise in der DE 101 58 042 A1 beschrieben.

Die Anforderungen für Brandschutzsysteme an die Feuerwiderstandsdauer, den Funktionserhalt und damit geforderte, einzuhaltende Temperaturen sind in den verschiedensten nationalen und europäischen Richtlinien und Normen festgeschrieben. Die Eignung der produzierten Abtrennungen für die jeweiligen Anforderungen müssen anhand von aufwändigen bauaufsichtlichen Zulassungen oder europäischen Zulassungen (EAD, ETA) und die Übereinstimmung des jeweiligen Produkts mit den der Zulassung zugrunde liegenden Konstruktionen im Übereinstimmungsnachweis belegt werden. Das hat zur Folge, das selbst geringe Änderungen an der Konstruktion eines jeden bauaufsichtlich zugelassenen Produkts dazu führen können, dass die Zulassung nicht mehr für dieses Produkt anwendbar ist und eine Zulassung im Einzelfall beantragt werden muss.

In der Vergangenheit wurden die Anforderungen an Brandschutzsysteme immer höher, was zu komplexeren und damit auch größeren und schwereren Brandschutzsystemen führt. Immer häufiger werden Feuerwiderstandsklassen bis F 180 gefordert. Derartige mittlere Gehäusegrößen wiegen ca. 700 - 800 kg, Standgehäuse bereits bis zu 1,5 t. Um diese heben und vertragen zu können, sind aufwendige Hilfsmittel erforderlich, die jedoch nicht in die Konstruktion des Brandschutzsystems eingreifen dürfen, um die Zulassung nicht zu gefährden. In vielen baulichen Situationen sind jedoch die Möglichkeiten für derartige Hilfsmittel begrenzt.

Der Erfindung liegt folglich die Aufgabe zugrunde, Brandschutzsysteme anzugeben, welche besser und gegebenenfalls auch ohne zusätzliche Hilfsmittel angehoben und getragen werden kann, ohne diese Systeme zu verändern oder zu schädigen.

Es wird vorgeschlagen, die Lüftungsöffnung oder bei umfangreichen Brandschutzsystemen mehrere Lüftungsöffnungen für den Transport zu nutzen, indem zumindest eine Öffnungsseite so modifiziert wird, dass diese als Transporthalterung dienen kann. Die Lüftungsöffnung für diese Zwecke zu verwenden hat den Vorteil, dass sie den Zugriff auf die Wand bzw. das Bauelement als tragendes Teil des Brandschutzsystems gestattet und dass lediglich deren Geometrie und Oberfläche der erweiterten Funktion entsprechend modifiziert werden müssen. Damit ist kein Eingriff in die Konstruktion des Brandschutzsystems in dem Maße erforderlich, dass die Zulassung oder der Übereinstimmungsnachweis berührt wird.

Ist das Brandschutzsystem groß und schwer, weist sie aufgrund der Lüftungsanforderungen auch mehrere Lüftungsöffnungen auf, so dass diese alle als Transporthalterung dienen können und eine optimale Kraftverteilung möglich ist, sofern vorhanden auch auf Lüftungsöffnungen in der Decke eines Brandschutzgehäuses so dass Hebezeuge verwendbar sind.

Die Transporthalterungen können in Abhängigkeit von Größe, Gestalt und Gewicht des Brandschutzsystems als Tragegriff ausgebildet sein. In diesem Fall sollte eine oder zwei Hände durch die Öffnung, meist von der Außenseite des Brandschutzsystems her, greifen können und die Öffnung ohne scharfe Kanten oder Ecken geformt sein. Ein solcher Tragegriff kann bei entsprechend geeignetem Design während des Transports des Brandschutzsystems über eine vorteilhafte Kraftaufnahme und Kraftverteilung gleichzeitig stabilisierend wirken.

Auch eine temporäre Abdeckung für den Öffnungsrand, welche nach dem Transport wieder gelöst werden kann, ist für diese Zwecke geeignet. So kann nach dem Vertragen ein in der Lüftungsöffnung vorgesehenes Filtergitter wieder eingesetzt werden. Werden Hebezeuge verwendet, kann die Abdeckung an das Hebezeug angepasst werden. Im Ergebnis minimiert solch ein lösbares Hilfsmittel die Modifizierung des Brandschutzsystems weiter und verbessert deren Tragbarkeit.

Grundsätzlich kann die Lüftungsöffnung in Größe und Form auch ohne solch ein Hilfsmittel an ein anderes Heben und Transportieren als per Hand angepasst werden.

Regelmäßig sind die Brandschutzsysteme so ausgebildet, dass sie stabil genug sind, um sich beim Heben und Tragen aufgrund des Eigengewichts nicht zu verziehen oder solche Schädigungen davonzutragen, dass ihre Brandschutzeigenschaften oder gar die Standsicherheit gefährdet ist. Sofern es sich als erforderlich erweist, kann eine mechanische Stabilisierung zumindest der Wand und/oder des Bauelements vorgenommen werden, welche über deren Transporthalterung Kraft aufnimmt. Die mechanische Stabilisierung kann in Abhängigkeit von der Größe des Brandschutzsystems und aus Kostengründen nur die Transporthalterungen aufweisenden Wände und Bauelemente betreffen oder alle gleichermaßen.

Eine solche mechanische Stabilisierung schließt Material und Aufbau der Wand bzw. des Bauelements ebenso ein, wie deren Verbindungen zu den weiteren Wänden und Bauelementen des Brandschutzsystems. Auch diese Stabilisierungen sind beispielsweise durch Verstärkungen mit gleichen Materialien und nach gleichen Konstruktionsprinzipien derart möglich, dass die bauaufsichtliche Zulassung nicht verloren geht.

Dies ist entsprechend einer Ausgestaltung möglich, indem Wand und/oder Bauelement mit Transporthalterung aus zement- und/oder faserverstärktem Material ausgebildet werden. Als Basismaterial kann dazu weiterhin Gips oder Hochtemperaturwolle als das übliche Material für Brandschutzwände genutzt werden.

Eine solche Verstärkung gestattet es auch, die mechanische Stabilisierung auf ein höheres Maß als das Eigengewicht des Brandschutzsystems zu beziehen, bevorzugt auf bis zum doppelten des Eigengewichts. Damit ist ein Vertragen auch im oder nach dem Brandfall noch möglich, wenn in dem Brandschutzsystem Einbauten vorhanden sind oder Kühlmittel in die Wandung eingebracht wurden.

Häufig ist es auch ausreichend, bei einem mehrschaligen Aufbau der Wand oder des Bauelements, was für Brandschutzzwecke sehr häufig der Fall ist, lediglich eine der beiden äußersten Schalen wie oben beschrieben mechanisch zu verstärken, was neben den beschriebenen Verbindungen zu angrenzenden Wänden und Bauelementen auch die Verbindung der Schalen untereinander betreffen kann. Es ist selbstverständlich dass die Reduzierung der mechanischen Stabilisierung jene Schale betrifft, an der eine Haltekraft beim Heben auch tatsächlich angreift. Im Fall eines geschlossenen Gehäuses ist das regelmäßig die äußerste Schale.

In einer weiteren Ausgestaltung weist die Transporthalterung auch eine Halterung zur Aufnahme eines Filtergitters der Lüftungsöffnung entsprechend der IP-Schutzklasse des Brandschutzsystems. Derartige Filtergitter verhindern das Eindringen von Fremdkörpern, Staubfilter und auch von Wasser oder Feuchtigkeit. Solche Filtergitter sind auf den Einsatzort abgestimmt und an diesem erforderlich, so dass es möglich ist, diese nach dem Vertragen des Brandschutzsystems an seinen Einsatzort in die Lüftungsöffnung einzusetzen.

Die Erfindung sollnachfolgend anhand eines Ausführungsbeispiels näher erläutert werden. Die zugehörigen Zeichnungen zeigen in
- Fig. 1: eine perspektivische Ansicht eines Brandschutzgehäuses,
- Fig. 2: eine Seitenansicht des Brandschutzgehäuses nach Fig. 1,
- Fig. 3: eine Darstellung eines vertikalen Schnitts durch das Brandschutzgehäuse nach Fig. 1 und
- Fig. 4: eine Schnittdarstellung der Lüftungsöffnung entlang der in Fig. 3 dargestellten Schnittlinien A - A.

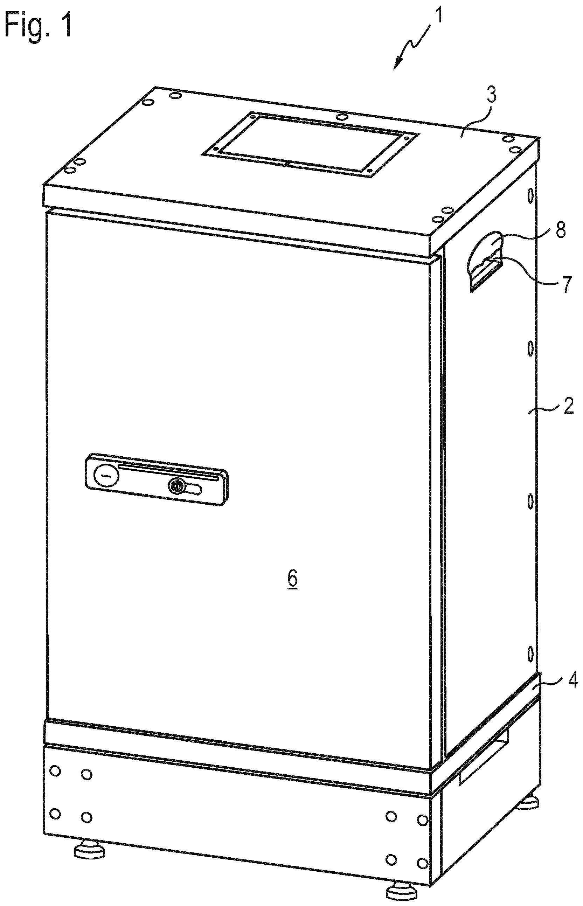

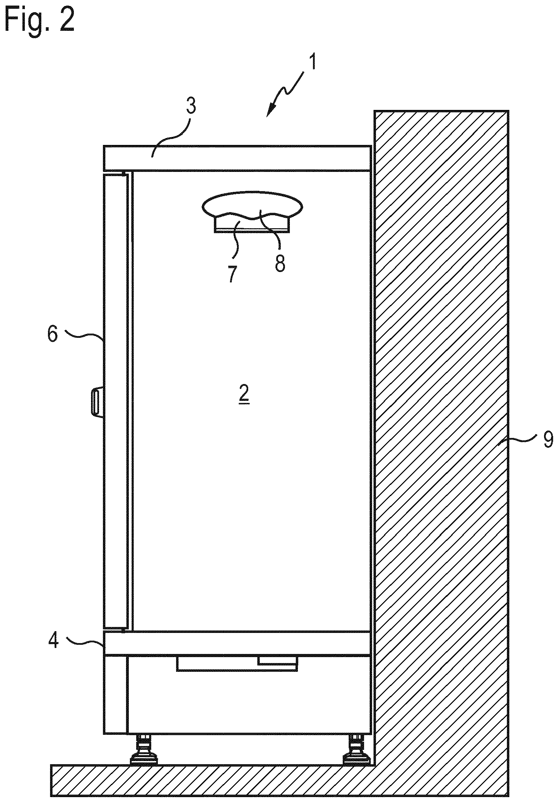

Die in Fig. 1 und Fig. 2 dargestellte Brandschutzsystem 1 ist ein Brandschutzgehäuse 1, beispielsweise für elektrische Anlagen. Es ist ein Standgehäuse der Feuerwiderstandsklasse EI90 und umfasst zwei Seitenwände 2, eine Deckwand 3, eine Bodenwand 4, eine Rückwand 5 (nicht sichtbar) und eine verschließbare Tür 6. Beide Seitenwände 2 weisen in ihrer oberen Hälfte je eine rechteckige Lüftungsöffnung 7 auf, welche an der äußeren, oberen Kante mit einer Abdeckung 8 zum Schutz der Hand eines Trägers versehen ist. Diese Abdeckung 8 ist als Haltegriff ausgebildet. Das Brandschutzgehäuse 1 steht im dargestellten Ausführungsbeispiel rückseitig an einem Mauerwerk 9.

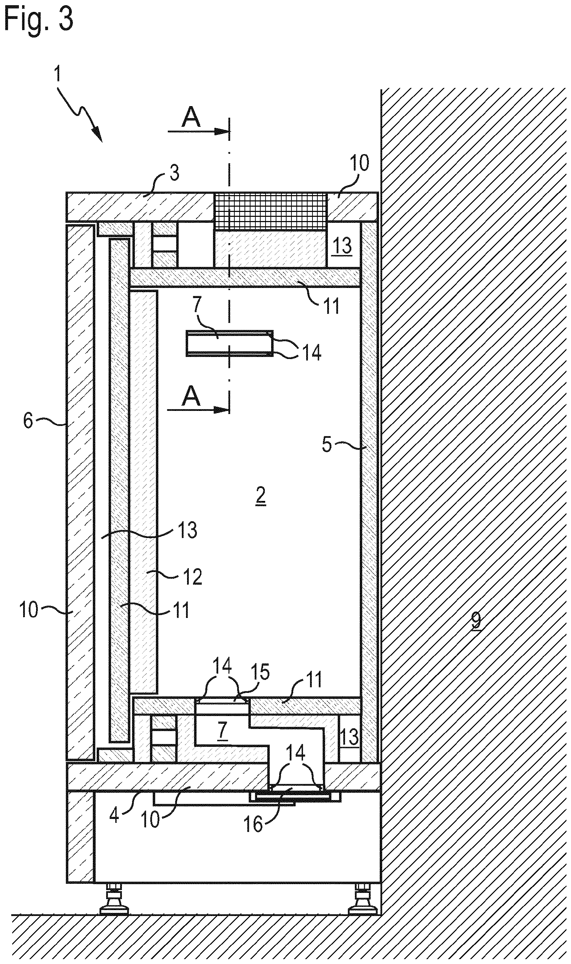

Die Schnittdarstellung von Fig. 3 zeigt eine einschalige Rückwand 5 sowie einen zweischaligen Wandaufbau von Deckwand 3 und Bodenwand 4 sowie der Tür 6. Zwischen beiden Schalen 10, 11 ist ein Zwischenraum 13 ausgebildet. Die Tür 6 weist darüber hinaus auf ihrer Innenseite eine Türdämmung 12 auf. Die Lüftungsöffnung 7, die im Gegensatz zu Fig. 2 hier von der Innenseite des Brandschutzgehäuses aus zu sehen ist, weist an ihrer oberen und unteren Längsseite eine Streifen Karbonschaum 14 im ungeschäumten Zustand auf. Der Karbonschaum 14 oder Aufschäumer schäumt unter Temperatureinwirkung im Brandfall und verschließt die Lüftungsöffnung 7 dann vollständig.

Von den beiden Schalen, innere Schale 10 und äußere Schale 11, jener dem Mauerwerk 9 abgewandten Wände 2, 3, 4 und der Tür 6 ist die äußere Schale 10 verstärkt durch eine verglichen zur inneren Schale 11 größere Dicke und durch ein zementverstärktes Gipsmaterial.

Auch die Bodenwand 4 weist eine Lüftungsöffnung 7 auf. Deren Verlauf ist S-förmig durch die zweischalige Wand geführt, so dass sich innen und außen liegende Durchgänge 15, 16 nicht gegenüber liegen. Auch diese Lüftungsöffnung 7 weist Streifen von Karbonschaum 14 auf, je zwei am inneren Durchgang 15 und zwei am äußeren Durchgang 16.

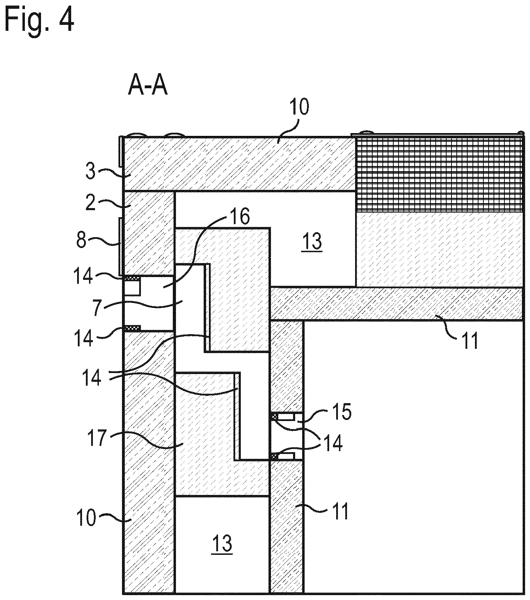

Die Lüftungsöffnung 7 der Seitenwand 2 ist als Detail im Schnitt in Fig. 4 dargestellt. Der Schnitt ist entlang der Schnittlinien A - A geführt, die in Fig. 3 dargestellt sind.

Fig. 4 ist zu entnehmen, dass der zweischalige Aufbau aus innerer Schale 11 und verstärkter äußerer Schale 10 auch in der Seitenwand 2 realisiert ist. Auch die Lüftungsöffnung 7 der Seitenwand 2 verläuft S-förmig durch die zweischalige Wand, so dass sich innerer Durchgang 15 und äußerer Durchgang 16 nicht gegenüber liegen. Beide Durchgänge 15, 16 weisen im Bereich der inneren und äußeren Schale 10, 11 je zwei Streifen Karbonschaum 14 zum beiderseitigen Verschluss der Lüftungsöffnung 7 im Brandfall. Ergänzend sind auch in der Wand liegenden Flächen des Kanals der Lüftungsöffnung 7 mit Karbonschaum 14 versehen.

Am äußeren Durchgang 16 ist der zu Fig. 1 beschriebene Haltegriff als Abdeckung 8 montiert, die lediglich die obere, äußere Kante der äußeren Schale 10 abdeckt, ohne den Streifen Karbonschaum 14 im inneren des äußeren Durchgangs 16 zu behindern. Die Funktionalität der Seitenwand 2 und der Lüftungsöffnung 7 ist durch die vorgenommenen Modifizierungen zur Tragbarkeit des Brandschutzgehäuses 1 nicht beeinträchtigt.

### Bezugszeichenliste

- 1: Brandschutzsystem, Brandschutzgehäuse
- 2: Seitenwand
- 3: Deckwand
- 4: Bodenwand
- 5: Rückwand
- 6: Tür
- 7: Lüftungsöffnung
- 8: Abdeckung
- 9: Mauerwerk
- 10: äußere Schale
- 11: innere Schale
- 12: Türdämmung
- 13: Zwischenraum
- 14: Karbonschaum
- 15: innerer Durchgang
- 16: äußerer Durchgang
- 17: Schaumplatte

## Patentansprüche

1. Brandschutzsystem für elektrische Anlagen, welches einen Raum ein- oder mehrseitig abschließt, zumindest einen Feuerwiderstand der Klasse EI30 aufweist und zumindest eine Wand und/oder ein verschließbares Bauelement mit einer Lüftungsöffnung (7) in Wand und/oder Bauelement umfasst, **dadurch gekennzeichnet, dass** die Geometrie und die Oberfläche der Lüftungsöffnung (7) auf zumindest einer Öffnungsseite derart ausgebildet ist, dass dieser Bereich der Lüftungsöffnung (7) als Transporthalterung dient.

2. Brandschutzsystem nach Anspruch 1, **dadurch gekennzeichnet, dass** zumindest jede Wand und jedes Bauelement, welche eine mit Transporthalterung ausgebildete Lüftungsöffnung (7) aufweisen, mechanisch derart stabil ausgebildet und miteinander verbunden sind, dass sie zumindest das Eigengewicht des Brandschutzsystems (1) ohne deren Schädigung tragen.

3. Brandschutzsystem nach Anspruch 2, **dadurch gekennzeichnet, dass** die mechanische Stabilisierung auf das Eigengewicht des Brandschutzsystems (1), multipliziert mit einem Faktor F im Bereich 1 ≤ F ≤ 2, bezogen wird.

4. Brandschutzsystem nach Anspruch 2 oder 3, **dadurch gekennzeichnet, dass** besagte Wand und/oder besagtes Bauelement mit Gips und/oder zement- und/oder faserverstärktem Material ausgebildet werden.

5. Brandschutzsystem nach einem der Ansprüche 2 bis 4, **dadurch gekennzeichnet, dass** besagte Wand und/oder besagtes Bauelement mehrschalig ausgebildet ist und seine äußere Schale (10) die mechanische Stabilisierung aufweist.

6. Brandschutzsystem nach einem der vorstehenden Ansprüche, **dadurch gekennzeichnet, dass** die Transporthalterung eine Halterung zur Aufnahme eines Filtergitters der Lüftungsöffnung (7) entsprechend der IP-Schutzklasse des Brandschutzsystems (1) aufweist.

## Claims

1. Fire protection system for electrical installations, which closes off a space on one or more sides, has at least a fire resistance of class EI30 and comprises at least one wall and/or a closable structural element with a ventilation opening (7) in the wall and/or structural element, **characterized in that** the geometry and the surface area of the ventilation opening (7) on at least one side of the opening are formed such that this region of the ventilation opening (7) serves as a transport holder.

2. Fire protection system according to Claim 1, **characterized in that** at least each wall and each structural element which have a ventilation opening (7) formed with a transport holder are of a mechanically stable design, and are connected to one another, such that they bear at least the dead weight of the fire protection system (1) without damaging the same.

3. Fire protection system according to Claim 2, **characterized in that** the mechanical stabilization relates to the dead weight of the fire protection system (1) multiplied by a factor F ranging from 1 ≤ F ≤ 2.

4. Fire protection system according to Claim 2 or 3, **characterized in that** said wall and/or said structural element are/is formed with gypsum and/or cement-reinforced and/or fibre-reinforced material.

5. Fire protection system according to one of Claims 2 to 4, **characterized in that** said wall and/or said structural element are/is of a multi-shell design, the outer shell (10) thereof having the mechanical stabilization.

6. Fire protection system according to one of the preceding claims, **characterized in that** the transport holder has a holder for accommodating a filter grille of the ventilation opening (7) in accordance with the IP rating of the fire protection system (1).

## Revendications

1. Système de protection contre l'incendie pour des installations électriques, qui entoure un espace ou clôt un espace sur plusieurs côtés, présente au moins une résistance au feu de classe EI30 et comprend au moins une paroi et/ou un élément structurel pouvant être fermé avec une ouverture de ventilation (7) dans la paroi et/ou dans l'élément structurel, **caractérisé en ce que** la géométrie et la surface de l'ouverture de ventilation (7) sur au moins un côté de l'ouverture sont réalisées de telle sorte que cette région de l'ouverture de ventilation (7) serve de fixation de transport.

2. Système de protection contre l'incendie selon la revendication 1, **caractérisé en ce qu'**au moins chaque paroi et chaque élément structurel qui présentent une ouverture de ventilation (7) réalisée avec une fixation de transport sont réalisés avec une stabilité mécanique et sont connectés mutuellement de telle sorte qu'ils portent au moins le poids propre du système de protection contre l'incendie (1) sans l'endommager.

3. Système de protection contre l'incendie selon la revendication 2, **caractérisé en ce que** la stabilisation mécanique se rapporte au poids propre du système de protection contre l'incendie (1) multiplié par un facteur F compris dans la plage 1 ≤ F ≤ 2.

4. Système de protection contre l'incendie selon la revendication 2 ou 3, **caractérisé en ce que** ladite paroi et/ou ledit élément structurel sont réalisés avec du plâtre et/ou un matériau renforcé par du ciment et/ou des fibres.

5. Système de protection contre l'incendie selon l'une quelconque des revendications 2 à 4, **caractérisé en ce que** ladite paroi et/ou ledit élément structurel sont réalisés sous forme multicoque et leur coque extérieure (10) présente la stabilisation mécanique.

6. Système de protection contre l'incendie selon l'une quelconque des revendications précédentes, **caractérisé en ce que** la fixation de transport présente une fixation pour recevoir une grille de filtration de l'ouverture de ventilation (7) conforme à la classe de protection IP du système de protection contre l'incendie (1).
